# EUROPÄISCHE PATENTSCHRIFT

(11) **EP 0 554 699 B1**
(45) Veröffentlichungstag und Bekanntmachung des Hinweises auf die Patenterteilung: **04.06.1997**
(21) Anmeldenummer: 93100660.5
(22) Anmeldetag: 18.01.1993
(51) Int. Cl.: B21D 1/08, B29C 53/20

(54) **Vorrichtung zum Runddrücken von Rohren**
Apparatus for rounding tubes
Dispositif pour cintrer des tubes

(30) Priorität: 18.01.1992 DE 9200560 U
(43) Veröffentlichungstag der Anmeldung: 11.08.1993
(73) Patentinhaber: Tylla, Jürgen, D-88662 Überlingen (DE); Kuenzer, Martin, D-78354 Sipplingen (DE)
(72) Erfinder: Tylla, Jürgen, D-88662 Überlingen (DE); Kuenzer, Martin, D-78354 Sipplingen (DE)
(74) Vertreter: Weiss, Peter, Dr. rer.nat.

(56) Entgegenhaltungen:
- DE-U- 8 902 521
- FR-A- 2 572 993
- US-A- 1 848 867
- US-A- 3 828 413
- US-A- 4 583 390

## Beschreibung

Die nachfolgende Erfindung betrifft ein Verfahren zum Runddrücken von Rohren mittels einer Vorrichtung mit Schalen, insbesondere zum Runddrücken von Kunststoffrohren, wie beispielsweise für eine Gasleitung, wobei die Schalen auf ein Rohr aufgelegt und zu einander bewegt werden, sowie eine Vorrichtung zum Durchführen des Verfahrens.

Insbesondere beim Bau und bei der Reparatur von Gasleitungen ist es bekannt, daß die in der Regel aus Polyäthylen bestehenden Kunststoffrohre vor bzw. nach einer Anschluß- bzw. Reparaturstelle abgequetscht werden. Hierzu dient eine Vorrichtung, bei welcher in der Regel zwei übereinander liegende Walzen, welche das Rohr beidseits angreifen, gegeneinander gedrückt werden.

Je nach Länge dieser Quetschung und auch nach Temperatur hat sich in der Vergangenheit herausgestellt, daß es durch diese Quetschung zu einer bleibenden Verformung des Rohres kommt. Zur Beseitigung dieser Verformung werden dem Rohr rohrschellenförmige Einrichtungen aufgesetzt und die entsprechenden Schrauben angezogen. Dieser Vorgang ist sehr mühsam und findet in der Regel im Bodenschlamm statt. Zudem liegen die Rohre oftmals nur sehr schwer zugänglich, so daß es sehr schwierig ist, mit einem Schraubenschlüssel die Schrauben anzugreifen.

In dem Gebrauchsmuster DE-U-89 02 521 ist eine Vorrichtung beschrieben, welche auf einfache und wirkungsvolle Weise die Verformung von Rohren beseitigt. Hierbei sind Schalen an Zangenschenkeln festgelegt, an welche nach einem Drehgelenk Spreizschenkel anschließen, die über eine Spreizeinrichtung miteinander verbunden sind. Werden die Spreizschenkel gespreizt, so werden die Schalen zu einander bewegt, umgreifen die verformte Stelle am Rohr und bringen diese wieder in einen runden Querschnitt.

Einziger Nachteil dieser Vorrichtung ist, daß über einen längeren Zeitraum hinweg die Schalen in Schließlage gehalten werden müssen, damit eine Rückverformung des Rohres stattfindet. Um sicherzustellen, daß beispielsweise der strömungsgünstige runde Querschnitt wieder erreicht wird, sollte dieses Rundungswerkzeug mindestens zehn bis dreißig Minuten im geschlossenen Zustand auf dem Rohr verbleiben. Hierdurch wird verständlicherweise die Arbeit an dem Rohr wesentlich verzögert.

Der Erfinder hat sich zum Ziel gesetzt, eine Vorrichtung der o.g. Art zu entwickeln, mittels der die Rückverformung des Rohres in einen runden Querschnitt auf einfache und kostengünstige Weise erfolgt, ohne daß der Arbeitsablauf negativ beeinflußt wird.

Zur Lösung dieser Aufgabe führt, daß die Schalen miteinander zu einer Muffe verbunden werden und die Vorrichtung nach dem Verbinden von der Muffe gelöst wird.

Dies bedeutet, daß nebst der entsprechenden Vorrichtung zum Runddrücken von Rohren jeweils mindestens zwei Schalen um ein Rohr gelegt bzw. gepresst werden, bis dieses Rohr einen runden Querschnitt hat. Danach werden diese beiden Schalen miteinander zu einer bleibenden Muffe verbunden und die Vorrichtung von den Schalen gelöst, so daß diese Schalen als Muffe auf dem Rohr verbleiben. Die entsprechende Vorrichtung kann dann an einer weiteren Stelle wieder eingesetzt werden, ohne daß auf eine Rückverformung des Rohres Rücksicht genommen werden muß. Hierdurch wird erhebliche Zeit eingespart.

Bevorzugt soll die Verbindung der Schalen miteinander durch die Schalen selbst erfolgen, so daß ein zusätzlicher Arbeitsgang erübrigt wird. Hierzu ist es notwendig, daß die Schalen an beiden Enden miteinander eine Verbindung eingehen. Bevorzugt ist wiederum diese Verbindung an beiden Enden gleich ausgestaltet, so daß für die Herstellung der Schalen, beispielsweise im Spritzgießverfahren, nur ein Formwerkzeug notwendig ist. Vom Erfindungsgedanken wird jedoch auch eine unterschiedliche Verbindungsmöglichkeit umfaßt, wie sie lediglich beispielhaft später beschrieben wird.

Eine einfache Verbindung ist möglich, wenn jede Schale einends eine Rastnut und andernends einen Rastkopf oder Rastwulst besitzt. Werden die Schalen um 180 Grad zueinander gedreht angeordnet, so greift beim Schließen der Schalen zu einer Muffe jeweils ein Rastkopf bzw. -wulst in eine Rastnut ein, so daß eine Schnappverbindung entsteht.

In einer weiteren beispielhaften Ausführungsform sind den Schalen jeweils endwärtig zinnenartige Anformungen mitgegeben, welche in Gebrauchslage reißverschlußartig in einander greifen. Die sich gegenüberliegenden zinnenartigen Anformungen einer Schale sind dabei auf Lücke gesetzt, so daß auch hier ein Formwerkzeug für beide Schalen genügt.

Wichtig ist, daß die zinnenartigen Anformungen sich beim Ineinandergreifen miteinander verbinden. Dies kann beispielsweise durch entsprechende Rastnoppen geschehen, welche in Rastlöcher zwischen zwei Zinnen der anderen Schale einschnappen.

Damit aber eine sichere Verbindung der beiden Schalen gewährleistet ist, besitzen diese zinnenartigen Anformungen jeweils Axialbohrungen, welche in Gebrauchslage miteinader fluchten. Durch diese Axialbohrungen wird dann ein Splint hindurchgesteckt, der die Schalen miteinander verbindet.

Ähnlich den zinnenartigen Anformungen können auch den Schalen entsprechende Zungen angeformt sein, die wiederum in Sacklöcher in der gegenüberliegenden Schale eingreifen. Auch hier ist eine Festlegung mittels eines Splintes denkbar.

Bei einer weiteren beispielhaften Ausführungsform besitzt die eine Schale einen oder mehrere Rastzähne, mit dem oder denen sie in Gebrauchslage in Rastbohrungen in der anderen Schale eingreift. Durch einen entsprechenden Rastzahn erfolgt eine gesicherte Festlegung, wobei hier kein Splint notwendig ist, allerdings das Lösen der beiden Schalen von einander erschwert sein kann.

Es sind sicherlich noch eine Vielzahl von weiteren Verbindungsmöglichkeiten denkbar.

Wesentlich ist auch, daß die Schalen von der Vorrichtung zum Runddrücken der Rohre gelöst werden können. Hierbei ist es einmal möglich, daß die Schalen mit entsprechenden Anformungen in Ausnehmungen der Vorrichtung sitzen, wobei sie entweder lose darin sitzen oder durch einen Splint gesichert sind. Ferner ist aber auch denkbar, daß jede Schale eine Aufnahme aufweist, in die wiederum ein entsprechender Zentrierbolzen od. dgl. der Vorrichtung eingreift. Auch hier sind viele Variationen denkbar.

Als eine geeignete Vorrichtung zum Festlegen der Schalen auf einem Rohr erscheint diejenige nach dem Gebrauchsmuster DE-U-89 02 521. Jedoch ist auch ein anderes Beispiel einer Vorrichtung denkbar, bei dem die Schalen an zwei Stützen lösbar befestigt sind, wobei der Abstand zwischen diesen beiden Stützen veränderbar ist. Hierbei kann eine Stütze ortsfest beispielsweise mit einer Schiene verbunden sein, während die andere Stütze auf dieser Schiene gleitet. Es ist jedoch auch denkbar, daß beide Stützen zueinander bewegbar sind. Der Antrieb für die Bewegung der Stützen kann beliebig gewählt werden. Es sind sowohl ein hydraulischer, pneumatischer als auch elektromotorischer Antrieb denkbar. Allerdings kann auch eine mechanisch betätigbare Spindel verwendet werden.

Der Erfinder hat auch an eine sehr einfache Herstellung der Schalen gedacht, indem diese aus dem Abfall der rundzudrückenden Rohre hergestellt werden. Werden diese Abfallstücke nämlich ein zweites Mal aufgeschmolzen, so besitzen sie eine größere Härte als diejenige der Rohrwandung. Auf diese Weise kann gleichzeitig auch ein günstiges Recycling von Abfallmaterial durchgeführt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine Draufsicht auf eine Vorrichtung zum Runddrücken von Rohren;
Fig. 2 eine Draufsicht auf eine Muffe;
Fig. 3 eine Explosionsdarstellung der Muffe gem. Fig. 2;
Fig. 4 eine Explosionsdarstellung eines weiteren Ausführungsbeispieles einer Muffe;
Fig. 5 eine Draufsicht auf die Muffe gem. Fig. 4 in Gebrauchslage;
Fig. 6 eine Draufsicht auf ein weiteres Ausführungsbeispiel einer Muffe;
Fig. 7 eine Draufsicht auf ein weiteres Ausführungsbeispiel einer Vorrichtung zum Runddrücken von Rohren.

Eine Vorrichtung R zum Runddrücken von Rohren weist zwei Zangenteile 1 und 2 auf, welche miteinander ein Drehgelenk 3 bilden. Einerseits des Drehgelenks 3 besteht jeder Zangenteil 1 bzw. 2 aus einem Spreizschenkel 4 bzw. 5 und andererseits aus einem Zangenschenkel 6 bzw. 7.

Jeder Zangenschenkel 6 bzw. 7 trägt endseitig eine Schale 8 bzw. 9, deren Radius in etwa einem Rohr, beispielsweise einem Polyäthylenrohr für eine Gasleitung, angepaßt ist.

Das Drehgelenk 3 wird im übrigen der Einfachheit halber durch einen Bolzen 10 gebildet, welcher entsprechende Gelenklaschen 11 durchsetzt, die den Zangenteilen l bzw. 2 angeformt sind. Im vorliegenden Ausführungsbeispiel kreuzen sich die Zangenteile 1 bzw. 2 nicht, jedoch ist auch diese Ausführungsform denkbar.

Zwischen den beiden Zangenteilen 1 und 2 bzw. den Spreizschenkeln 4 und 5 befindet sich eine Spreizeinrichtung 12. Diese Spreizeinrichtung 12 bewirkt ein Schließen der Zangenschenkel 6 und 7, wobei ein entsprechendes rundzudrückendes Rohr von den beiden Schalen 8 und 9 angegriffen wird.

Die technische Ausgestaltung der Spreizeinrichtung 12 ist von nebengeordneter Bedeutung. Je nach Luxusausführung können hier entsprechende hydraulische, pneumatische, elektrische od.dgl. Spreiztriebe Anwendung finden. In dem gezeigten einfachen Ausführungsbeispiel handelt es sich um eine mechanisch betätigbare Spreizeinrichtung. Hierzu sind vier Profilstreifen 13, 14, l5 und 16 zu einem Parallelogramm verbunden, wobei sie jeweils miteinander in den Endbereichen Drehgelenke 17 und 18 ausbilden. Die sich gegenüberliegenden Drehgelenke 17 und 18 weisen eine Verbindung, beispielsweise mittels eines Bolzens, mit jeweils einem Spreizschenkel 4 bzw. 5 auf.

Zwischen den Drehgelenken 17 und 18 liegen sich die Drehgelenke 19 und 20 gegenüber, wobei auch hier diese Drehgelenke 19 und 20 bevorzugt von einem Bolzen gebildet sind. Diese bolzenförmigen Drehgelenke 19 und 20 sind bevorzugt von einer Gewindestange 21 durchsetzt, welche der Betätigung der Spreizeinrichtung 12 dient. Die Gewindestange 21 bildet beispielsweise mit einem Drehgelenk ein Gleitlager, während ihr Außengewinde in ein nicht näher gezeigtes Innengewinde in dem gegenüberliegenden Drehgelenk eingreift und dieses kämmt. Wird die Gewindestange 21 dann gedreht, so bewegen sich die Drehgelenke 19 und 20 zueinander oder voneinander weg, wodurch ein Öffnen bzw. Schließen der Zangenschenkel 6 bzw. 7 erfolgt.

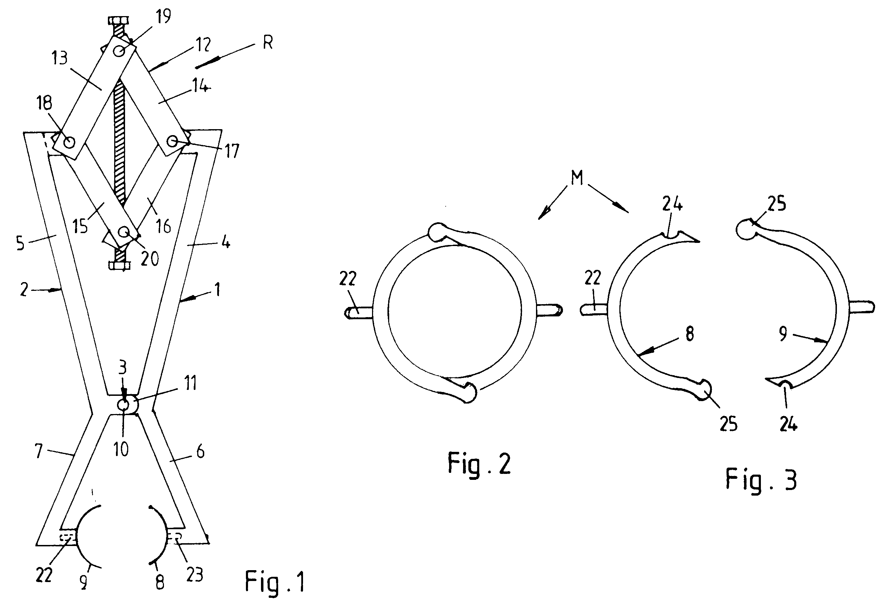

Wesentlich ist, daß die Schalen 8 und 9 entfernbar mit den jeweiligen Zangenschenkeln 6 bzw. 7 verbunden sind und zu einer Muffe M vereinigt werden können. In den Figuren 2 und 3 ist ein Ausführungsbeispiel einer derartigen Muffe M gezeigt. Eine entsprechende Schale 8 bzw. 9 besitzt etwa mittig eine Anformung 22, welche in Gebrauchslage in einer entsprechenden Ausnehmung 23 in dem jeweiligen Zangenschenkel 6 bzw. 7 steckt. Hier kann die Anformung 22 noch gegebenenfalls durch einen Splint od.dgl. gesichert sein, es kann jedoch auch genügen, daß sie lose in der Ausnehmung 23 steckt.

Ferner besitzt die Schale 8 bzw. 9 einends eine Rastnut 24 und andernends einen Rastkopf 25.

Schale 8 und 9 sind an dem jeweiligen Zangenschenkel 6 bzw. 7 um 180 Grad zueinander verdreht angeordnet. Auf diese Weise greift beim Zusammenfügen der beiden Schalen 8 bzw. 9 zu einer Muffe M ein jeweiliger Rastkopf 25 in eine jeweilige Rastnut 24 ein, so daß eine Schnappverbindung entsteht, welche die beiden Schalen 8 und 9 als Muffe M zusammenhält. Werden nun die beiden Zangenschenkel 6 und 7 geöffnet, so gleiten die Anformungen 22 aus den entsprechenden Ausnehmungen 23 und die beiden Schalen 8 bzw. 9 verbleiben als Muffe M auf dem rundzudrückenden Rohr. Die Vorrichtung R zum Runddrücken von Rohren kann nun sofort wieder an anderer Stelle weiterverwendet werden. Die Muffe M kann, sofern sie nicht einer weiteren Bearbeitung hinderlich ist, auf dem Rohr verbleiben oder aber zu einem späteren Zeitpunkt entfernt werden, wobei sie dann zumindest so lange auf dem Rohr verblieben ist, daß sie diesem tatsächlich wieder einen runden Querschnitt beigegeben hat.

Für die Ausbildung der Schalen 8 und 9 und insbesondere für deren Verbindung miteinander gibt es eine Vielzahl von möglichen Ausführungsvarianten. Wesentlich ist allein, daß die Schalen 8 bzw. 9 von den Zangenschenkeln 6 bzw. 7 gelöst und miteinander zu einer bleibenden Muffe M verbunden werden können.

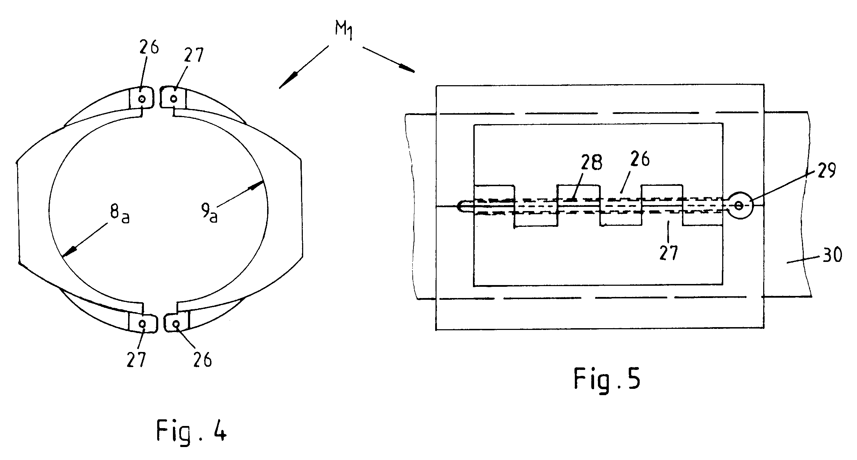

In einem weiteren Ausführungsbeispiel einer Muffe M 1 gem. den Figuren 4 und 5 besitzt jede Schale 8a bzw. 9a zinnenartige Anformungen 26 und 27, welche, wie insbesondere in Fig. 5 gezeigt, in Gebrauchslage ineinander greifen Diese zinnenartigen Anformungen 26 und 27 sind von entsprechenden Axialbohrungen 28 durchsetzt, wobei Axialbohrungen 28 der zinnenartigen Anformungen 26 und 27 in Gebrauchslage fluchten, so daß durch sie ein Splint 29 hindurchgeschoben werden kann, der so die Schalen 8a und 9a miteinander verbindet. Auf diese Weise wird eine sichere Festlegung der Muffe M 1 um ein Rohr 30 bewirkt. Durch diese Ausgestaltung ist im übrigen sowohl bei der Muffe M wie auch bei der Muff M 1 nur ein Spritzwerkzeug für die Schalen 8 bzw. 9 notwendig, da diese Schalen identisch ausgebildet sind. Sie werden nur jeweils um 180 Grad gedreht zueinander verwendet.

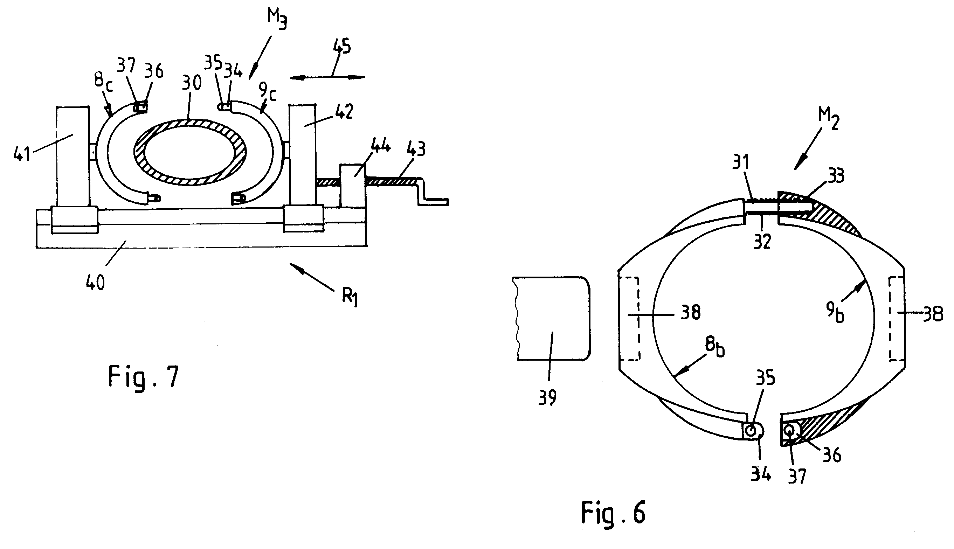

Letztgenannter Vorteil ist bei dem Ausführungsbeispiel einer Muffe M 2 gem. Fig. 6 nicht gegeben. Hier besitzt beispielsweise die Schale 8b einerseits einen Rastzahn 31 mit einer entsprechenden Rastzahnung 32, welche in Gebrauchslage in eine entsprechende Rastbohrung 33 an der anderen Schale 9b eingeschoben wird. Diese Rastbohrung 33 kann mit einer entsprechenden Innenzahnung ausgebildet sein.

Andererseits ist der Schale 8b eine Zunge 34 mit einer Axialbohrung 35 angeformt, welche in Gebrauchslage in ein Sackloch 36 an der Schale 9b eingreift, welche ebenfalls eine übereinstimmende Axialbohrung 37 besitzt. Durch diese Axialbohrungen 35 und 37 wird dann wieder ein nicht näher gezeigter Splint gesteckt, so daß die Schalen 8b und 9b lagegesichert sind. Selbstverständlich können auch mehrere solcher Zungen 34 und Sacklöcher 36 nebeneinander angeordnet sein.

In dem Ausführungsbeispiel gem. Fig. 6 ist auch gezeigt, daß für die Halterung der Schalen 8b und 9b an den Zangenschenkeln 6 und 7 nicht unbedingt eine Anformung 22 notwendig ist, sondern daß in die Schalen selbst eine Aufnahme 38 eingeformt sein kann, in welche ein Zentrierbolzen 39 an den Zangenschenkeln 6 bzw. 7 eingreift. Zum Lösen werden diese Zentrierbolzen 39 beim Öffnen der Zangenschenkel 6 bzw. 7 einfach aus den Aufnahmen 38 gezogen.

In Fig. 7 ist ein weiteres Ausführungsbeispiel einer Vorrichtung R 1 zum Runddrücken von Rohren gezeigt, welche mit einem weiteren Ausführungsbeispiel einer Muffe M 3 arbeitet. Die Vorrichtung R 1 besteht hier aus einer beispielsweise T-förmigen Schiene 40, auf welcher eine Stütze 41 ortsfest angeordnet ist. Dieser ortsfesten Stütze 41 gegenüber sitzt eine verschiebbare Stütze 42, welche von einer Gewindespindel 43 angegriffen wird. Diese Gewindespindel 43 dreht in einem nicht näher gezeigten Innengewinde in einem Lagerbock 44, während sie in der Stütze 42 frei läuft. Hierdurch erfolgt eine Bewegung der Stütze 42 in Richtung des Doppelpfeiles 45.

Die Schalen 8c und 9c der Muffe M 3 sind lösbar mit den Stützen 41 und 42 verbunden. Im gezeigten Ausführungsbeispiel besitzt jede Muffe entsprechende Zungen 34 mit den Axialbohrungen 35, welche in entsprechende Sacklöcher 36 mit den entsprechenden Axialbohrungen 37 in der gegenüberliegenden Schale eingreifen und dort durch einen Splint miteinander verbunden werden können. Im Gegensatz zu dem Ausführungsbeispiel gem. Fig. 6 sind die Zungen 34 jeweils direkt auf der Stirnfläche der sich gegenüber liegenden Schalen angeformt und entsprechend die Sacklöcher 36 in diese Stirnflächen eingeformt.

Bei diesem Ausführungsbeispiel einer Vorrichtung R 1 versteht es sich von selbst, daß die Spindel 43 auch die beiden Stützen 41 und 42 miteinander verbinden kann, so daß diese aufeinander zu bewegt werden.

### POSITIONSZAHLENLISTE

- 1: Zangenteil
- 2: "
- 3: Drehgelenk
- 4: Spreizschenkel
- 5: "
- 6: Zangenschenkel
- 7: "
- 8: Schale
- 9: "
- 10: Bolzen
- 11: Gelenklasche
- 12: Spreizeinrichtung
- 13: Profilstreifen
- 14: "
- 15: "
- 16: "
- 17: Drehgelenk
- 18: "
- 19: "
- 20: "
- 21: Gewindestange
- 22: Anformung
- 23: Ausnehmung
- 24: Rastnut
- 25: Rastkopf
- 26: zinnenartige Anformungen
- 27: "
- 28: Axialbohrung
- 29: Splint
- 30: Rohr
- 31: Rastzahn
- 32: Rastzahnung
- 33: Rastbohrung
- 34: Zunge
- 35: Axialbohrung
- 36: Sackloch
- 37: Axialbohrung
- 38: Aufnahme
- 39: Zentrierbolzen
- 40: Schiene
- 41: Stütze
- 42: Stütze
- 43: Gewindespindel
- 44: Lagerblock
- 45: Doppelpfeil
- 46:
- 47:
- 48:
- 49:
- 50:
- 51:
- 52:
- 53:
- 54:
- 55:
- 56:
- 57:
- 58:
- 59:
- 60:
- 61:
- 62:
- 63:
- 64:
- 65:
- 66:
- M: Muffe
- R: Vorr. z. Runddrücken von Rohren

## Patentansprüche

1. Verfahren zum Runddrücken von Rohren mittels einer Vorrichtung mit Schalen (8, 9), insbesondere zum Runddrücken von Kunststoffrohren, wie beispielsweise für eine Gasleitung, wobei die Schalen (8, 9) auf ein Rohr aufgelegt und zu einander bewegt werden,
dadurch gekennzeichnet,
daß die Schalen (8, 9) miteinander zu einer Muffe verbunden werden und die Vorrichtung nach dem Verbinden von der Muffe gelöst wird.

2. Vorrichtung zum Runddrücken von Rohren, insbesondere von Kunststoffrohren, wie beispielsweise Rohre für eine Gasleitung, mit das Rohr angreifenden Schalen (8, 9), die von den übrigen Teilen der Vorrichtung lösbar sind dadurch gekennzeichnet, daß die Schalen (8, 9) mit Verbindungselementen (24, 25 oder 26-29 oder 31-37) versehen sind, so daß sie miteinander zu einer Muffe (M) verbindbar sind

3. Vorrichtung nach Anspruch 2, dadurch gekennzeichnet, daß der Schale (8, 9) einends eine Rastnut (24) eingeformt und andernends ein Rastkopf (25) angeformt ist, wobei jeweils der Rastkopf (25) der einen Schale (8) in die Rastnut (24) der anderen Schale (9) eingreift, wodurch eine Muffe (M) um ein Rohr (30) gebildet ist.

4. Vorrichtung nach Anspruch 2, dadurch gekennzeichnet, daß jede Schale (8 a, 9 a) beidends zinnenartige Anformungen (26, 27) aufweist, welche in Gebrauchslage ineiander greifen und miteinander verbunden sind.

5. Vorrichtung nach Anspruch 4, dadurch gekennzeichnet, daß die zinnenartigen Anformungen (26, 27) Axialbohrungen (28) aufweisen, die in Gebrauchslage untereinander fluchten und durch die in Gebrauchslage ein Splint (29) gesteckt ist.

6. Vorrichtung nach Anspruch 2, dadurch gekennzeichnet, daß jeder Schale (8c, 9c) einends Zungen (34) angeformt und andernends Sacklöcher (36) eingeformt sind, wobei in Gebrauchslage die Zungen (34) in die Sacklöcher (36) eingreifen und dort festgelegt sind.

7. Vorrichtung nach Anspruch 6, dadurch gekennzeichnet, daß zur Festlegung Zunge (34) und Sackloch (36) eine entsprechende Axialbohrung (37) aufweisen, durch welche ein Splint geführt ist.

8. Vorrichtung nach Anspruch 2, dadurch gekennzeichnet, daß einer Schale (8b) zumindest einends ein Rastzahn (31) angeformt ist, welcher in eine Rastbohrung (33) in der anderen Schale (9 b) eingreift.

9. Vorrichtung nach wenigstens einem der Ansprüche 2 - 8, dadurch gekennzeichnet, daß die Schale (8, 9) zumindest eine Anformung (22) aufweist, welche lösbar in einer Ausnehmung (23) in der Vorrichtung (R) sitzt.

10. Vorrichtung nach wenigstens einem der Ansprüche 2 - 8, dadurch gekennzeichnet, daß in die Schale (8, 9) zumindest eine Aufnahme (38) eingeformt ist, in welche zumindest ein Zentrierbolzen (39) od. dgl. der Vorrichtung (R) eingreift.

11. Vorrichtung nach wenigstens einem der Ansprüche 2 - 10, dadurch gekennzeichnet, daß die Schalen (8, 9) einends mit zwei Zangenteilen (1, 2) lösbar verbunden sind, welche um ein Drehgelenk (3) drehen, und andernends der Schalen (8, 9) eine Spreizeinrichtung (12) vorgesehen ist.

12. Vorrichtung nach wenigstens einem der Ansprüche 2 - 10, dadurch gekennzeichnet, daß die Schalen (8, 9) mit zwei Stützen (41, 42) auf einer Schiene (40) lösbar verbunden sind, wobei der Abstand der beiden Stützen (41, 42) zueinander veränderbar ist.

## Claims

1. Method for rounding tubes by means of a device having shells (8, 9), more especially for rounding plastics material tubes, such as for a gas pipeline, for example, the shells (8, 9) being applied to a tube and moved towards each other, characterised in that the shells (8, 9) are interconnected to form a sleeve, and the apparatus is detached from the sleeve after the connection process.

2. Apparatus for rounding tubes, more especially plastics material tubes such as tubes for a gas pipeline, for example, having shells (8, 9), which co-operate with the tube and are detachable from the other parts of the apparatus, characterised in that the shells (8, 9), provided with connection elements (24, 25 or 26 - 29 or 31 - 37), are interconnectable to form a sleeve (M).

3. Apparatus according to claim 2, characterized in that, in the shell (8, 9), a locking groove (24) is provided at one end and a locking head (25) is moulded-on at the other end, the respective locking head (25) of one shell (8) engaging in the locking groove (24) of the other shell (9), whereby a sleeve (M) is formed around a tube (30).

4. Apparatus according to claim 2, characterised in that each shell (8a, 9a) has at both ends crenellation-like moulded-on portions (26, 27), which engage in one another and are interconnected in the position of use.

5. Apparatus according to claim 4, characterised in that the crenellation-like moulded-on portions (26, 27) comprise axial bores (28), which are in alignment beneath one another in the position of use, and through which a split pin (29) is inserted in the position of use.

6. Apparatus according to claim 2, characterised in that, in each shell (8c, 9c), projection members (34) are moulded-on at one end and blind holes (36) are provided at the other end, the projection members (34) engaging in the blind holes (36) in the position of use and being secured there.

7. Apparatus according to claim 6, characterised in that projection member (34) and blind hole (36) have a corresponding axial bore (37) for securement, through which bore a split pin extends.

8. Apparatus according to claim 2, characterised in that a locking tooth (31) is moulded-on at least at one end of a shell (8b), said locking tooth engaging in a locking bore (33) in the other shell (9b).

9. Apparatus according to at least one of claims 2 - 8, characterised in that the shell (8, 9) has at least one moulded-on portion (22), which sits detachably in a recess (23) in the device (R).

10. Apparatus according to at least one of claims 2 - 8, characterised in that at least one receiving means (38) is provided in the shell (8, 9), in which receiving means at least one centring pin (39) or the like of the device (R) engages.

11. Apparatus according to at least one of claims 2 - 10, characterised in that the shells (8, 9) are detachably connected at one end with two gripping members (1, 2) which rotate about a pivot joint (3), and an expanding means (12) is provided at the other end of the shells (8, 9).

12. Apparatus according to at least one of the claims 2 - 10, characterised in that the shells (8, 9) are detachably connected to two supports (41, 42) on a bar (40), the spacing between the two supports (41, 42) being variable with respect to each other.

## Revendications

1. Procédé pour cintrer des tubes, au moyen d'un dispositif à coquilles (8, 9), en particulier des tubes en matière plastique tels que ceux utilisés comme conduites de gaz, les coquilles étant appliquées et déplacées sur le tube,
caractérisé en ce que
les coquilles (8, 9) sont reliées entre elles par un manchon, et le dispositif est dégagé après que la liaison des coquilles ait été assurée par le manchon.

2. Dispositif pour cintrer des tubes, en particulier des tubes en matière plastique tels que ceux utilisés comme conduites de gaz, au moyen de coquilles (8, 9) saisissant le tube qui peuvent être séparées des autres parties du dispositif,
caractérisé en ce que
les coquilles (8, 9) sont équipées d'éléments de liaison (24, 25 ou 26, 29 ou 31, 37) permettant de les relier à un manchon (M).

3. Dispositif selon la revendication 2,
caractérisé en ce que
chaque coquille (8, 9) porte à une extrémité une rainure d'attache (24) et à l'autre extrémité une tête d'attache (25), la tête (25) d'une coquille (8) pouvant venir en prise dans la rainure (24) de l'autre coquille (9) en créant ainsi un manchon (M) autour du tube (30)

4. Dispositif selon la revendication 2,
caractérisé en ce que
chaque coquille (8a 9a) porte à ses extrémités des saillies crénelées (26, 27) qui, en position d'utilisation, sont en prise l'une dans l'autre et reliées entre elles.

5. Dispositif selon la revendication 4,
caractérisé en ce que
les saillies crénelées (26, 27) sont percées d'alésages axiaux (28) qui, en position d'utilisation, sont alignés et traversés par une goupille emmanchée (29).

6. Dispositif selon la revendication 2,
caractérisé en ce que
chaque coquille (8c, 9c) porte à une extrémité des languettes (34) et à l'autre extrémité des trous borgnes (36) qui, en position d'utilisation, sont en prise et bloqués les uns dans les autres à ce niveau.

7. Dispositif selon la revendication 6,
caractérisé en ce que
la fixation d'une languette (34) dans un trou borgne (36) est assurée par un perçage axial (37) correspondant réalisé dans chaque partie et traversé par une goupille.

8. Dispositif selon la revendication 2,
caractérisé en ce qu'
une coquille (8b) porte à une extrémité au moins une dent de blocage (31) qui vient en prise dans un perçage d'arrêt (33) de l'autre coquille (9b).

9. Dispositif selon une des revendications 2 à 8,
caractérisé en ce que
la coquille (8, 9) présente au moins une saillie (22) qui vient se loger amovible dans un évidement (23) du dispositif (R).

10. Dispositif selon au moins une des revendications 2 à 8,
caractérisé en ce que
la coquille (8, 9) présente au moins un logement (38) dans lequel vient en prise au moins un téton de centrage (39) ou un organe analogue porté par le dispositif (R).

11. Dispositif selon au moins une des revendications 2 à 10,
caractérisé en ce que
les coquilles (8, 9) peuvent être reliées de manière amovible aux extrémités de deux branches de pinces (1, 2) tournant autour d'une articulation (3), tandis qu'un dispositif d'écartement (12) est prévu entre les autres extrémités des coquilles (8, 9).

12. Dispositif selon au moins une des revendications 2 à 10,
caractérisé en ce que
les coquilles (8, 9) peuvent être reliées de manière amovible à deux supports (41, 42) montés sur un rail (40) et dont l'écartement des deux supports (41, 42) est variable entre eux.
